# EUROPÄISCHE PATENTANMELDUNG

(11) **EP 1 074 799 A2**
(43) Veröffentlichungstag der Anmeldung: **07.02.2001**
(21) Anmeldenummer: 00116345.0
(22) Anmeldetag: 28.07.2000
(51) Int. Cl.: F25B 29/00, F25B 17/08, F25B 49/04

(54) **Adsorptionswärmepumpe**

(30) Priorität: 06.08.1999 DE 19938380; 10.08.1999 DE 19938088; 17.04.2000 AT 6582000
(71) Anmelder: Joh. Vaillant GmbH u. Co., 42859 Remscheid (DE)
(72) Erfinder: Lang, Rainer, Dr., 51067 Köln (DE); Roth, Manfred, Dr., 52076 Aachen (DE); Stricker, Marc, 52064 Aachen (DE)
(74) Vertreter: Heim, Johann-Ludwig, Dipl.-Ing.

(57) **Zusammenfassung**

Verfahren zur Steuerung einer Adsorptionswärmepumpe mit mehreren Modulen, wobei Verbraucher (V), Pumpen (P1, P2, P3, P4), Wärmetauscher (KWT, NWT, HWT, VWT), Adsorber (A1, A2, A3) und Desorber (D1, D2, D3), Kondensatoren (K1, K2, K3) und Verdampfer (V1, V2, V3) in vier Wärmeträgerkreisläufen (W1, W2, W3, W4) zusammengeschaltet sind. Um auch bei Teillast einen guten Wirkungsgrad zu erreichen, ist vorgesehen, daß die erforderlichen Heizleistungen mittels einer Veränderung der Volumenströme (Vp1, Vp2, Vp3) der Wärmeträgerkreisläufe (W1, W2, W3) nach einem vorgegebenen Algorithmus bereitgestellt werden, wobei die im Verbraucherkreislauf (W4) bereitgestellte Heizleistung umso geringer ist desto geringer der jeweilige Volumenstrom ist.

## Beschreibung

Die Erfindung bezieht sich auf eine Adsorptionswärmepumpe gemäß dem Oberbegriff des Anspruches 1.

Sorptionswärmepumpen aller Art können zur Beheizung von Gebäuden sowie zur Bereitung von Warmwasser eingesetzt werden. Sie zeichnen sich durch eine besonders gute Effizienz aus, da sie mit Hilfe eines thermodynamischen Kreisprozesses Umgebungswärme auf ein für Heiz- oder Warmwasserzwecke nutzbares Temperaturniveau bringen. Durch diesen Effekt können mit derartigen Wärmepumpen deutlich höhere primärenergetische Nutzungsgrade erreicht werden, als mit konventioneller Heiztechnik.

Bei solchen Adsorptionswärmepumpen ist es erforderlich,Desorber und Adsorber von der Hochdruckphase in die Niederdruckphase und umgekehrt umzuschalten.

Ziel der Erfindung ist es, ein Verfahren der eingangs erwähnten Art vorzuschlagen, bei dem bei Teillastbetrieb ein günstiger Wirkungsgrad erhalten bleibt.

Erfindungsgemäß wird dies durch die kennzeichnenden Merkmale des Anspruches 1 erreicht.

Durch diese Maßnahmen ist es möglich den Betrieb der Wärmepumpe entsprechend den Wärmebedarfsanforderungen für Heizwärme und bzw. oder Trinkwassererwärmung zu gestalten, wobei die einzelnen Wärmeträgerkreise sehr günstig betrieben werden können.

Dies wird auch durch die kennzeichnenden Merkmale des Anspruches 2 und 3 erreicht.

Die Erfindung wird nun anhand der Zeichnung näher erläutert. Dabei zeigen:
Fig. 1 schematisch eine Adsorptionswärmepumpe,
Fig. 2 schematisch die Schaltung der Adsorber und Desorber,
Fig. 3 und 4 schematisch verschiedene Schaltungen der Kondensatoren und der Verdampfer,
Fig. 5 und 6 verschiedene Schaltungen der Kondensatoren und
Fig. 7 und 8 verschiedene Schaltungen der Verdampfer.

Gleiche Bezugszeichen bedeuten in allen Figuren gleiche Einzelteile.

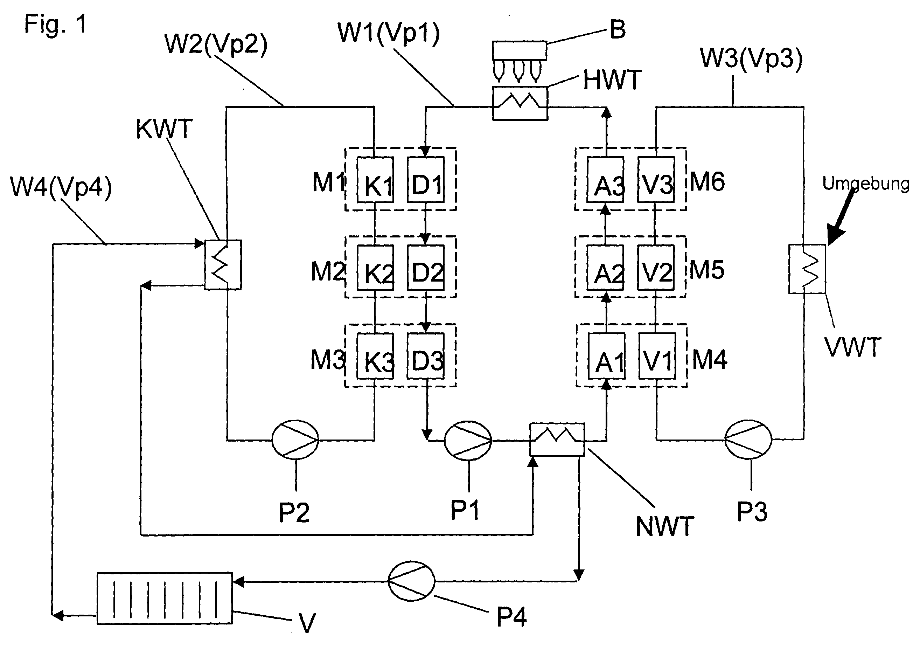

Wie aus der Fig. 1 ersichtlich ist, weist die Adsorptionswärmepumpe im wesentlichen vier Wärmeträgerkreisläufe auf. Dabei umfaßt der Wärmeträgerkreislauf W1 die Desorber D1, D2, D3 von Modulen M1, M2, M3, die Adsorber A1, A2, A3 der Module M4, M5, M6 sowie einen von einem Brenner B beaufschlagten Hochtemperatur-Wärmetauscher HWT, einen Niedertemperatur-Wärmetauscher NWT und eine Pumpe P1, wobei diese Teile seriell miteinander verbunden sind.

Der Niedertemperatur-Wärmetauscher NWT ist weiters auch Teil eines Verbraucher-Wärmeträgerkreislaufs W4. Dieser Wärmeträgerkreislauf W4 umfaßt weiters einen Verbraucher V, einen Kondensator-Wärmetauscher KWT und eine Pumpe P4, die seriell miteinander zusammengeschaltet sind.

Dieser Kondensator-Wärmetauscher KWT ist weiters Teil eines weiteren Wärmeträgerkreislaufes W2. Dieser Wärmeträgerkreislauf W2 umfaßt weiters eine Pumpe P2 und die Kondensatoren K1, K2, K3 der Module M1, M2, M3.

Ein weiterer Wärmeträgerkreislauf W3 umfaßt die Verdampfer V1, V2, V3 der Module M4, M5, M6 einen Verdampfer-Wärmetauscher VWT, sowie eine Pumpe P3, wobei diese Teile seriell miteinander verbunden sind.

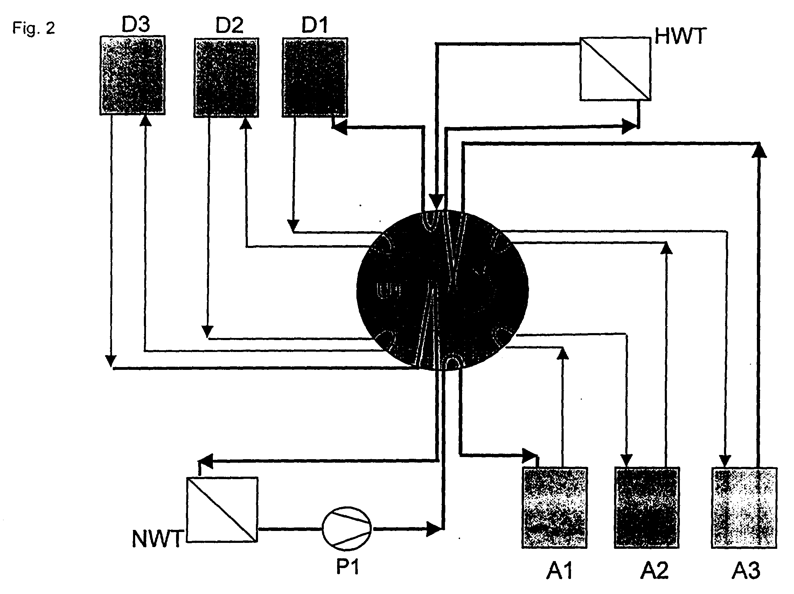

Aus Fig. 2 ist die Schaltung der Adsorber A1, A2, A3 und der Desorber D1, D2 und D3 der Module M1, M2, M3, M4, M5, M6 im Wärmeträgerkreislauf W1 zu ersehen. Dabei sind diese Bauteile untereinander und mit dem Hochtemperatur-Wärmetauscher HWT und der Serienschaltung des Niedertemperatur-Wärmetauschers NWT mit der Pumpe P1 über eine Umschalteinrichtung U1 in Reihe geschaltet.

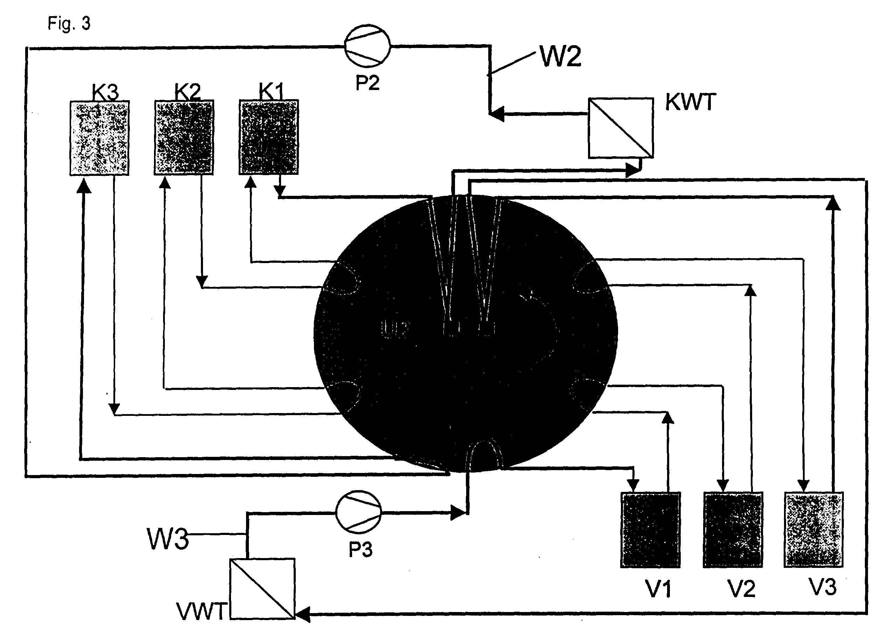

Weiters sind, wie aus der Fig. 3 zu ersehen ist, die Kondensatoren K1, K2, K3 und die Verdampfer V1, V2, V3 der Module M1, M2, M3, M4, M5 und M6 der Wärmeträgerkreislaufe W2 und W3 mit der Serienschaltung des Kondensator-Wärmetauschers KWT und der Pumpe P2 und der Serienschaltung des Verdampfer-Wärmetauschers VWT und der Pumpe P3 über eine weitere Umschalteinrichtung U2 miteinander in Reihe verbunden.

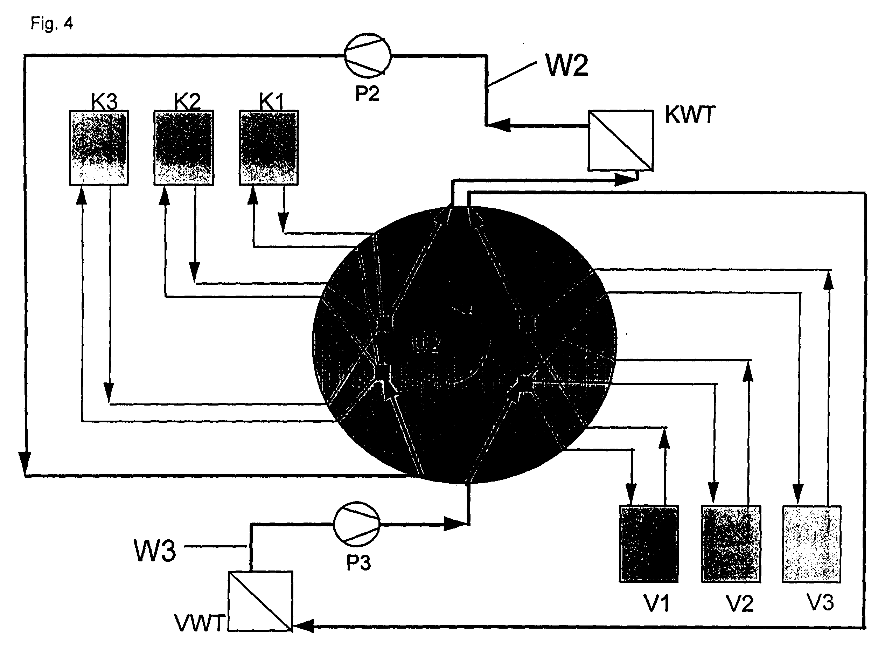

Bei der Ausführungsform nach der Fig. 4 sind die Kondensatoren K1, K2, K3 und die Verdampfer V1, V2, V3 der Module M1, M2, M3, M4, M5 und M6 der Wärmeträgerkreislaufe W2 und W3 über die Umschalteinrichtung U2 jeweils parallel geschaltet und diese Parallelschaltungen mit dem Kondensator-Wärmetauscher KWT, bzw. mit dem Verdampfer-Wärmetauscher VWT in Reihe geschaltet.

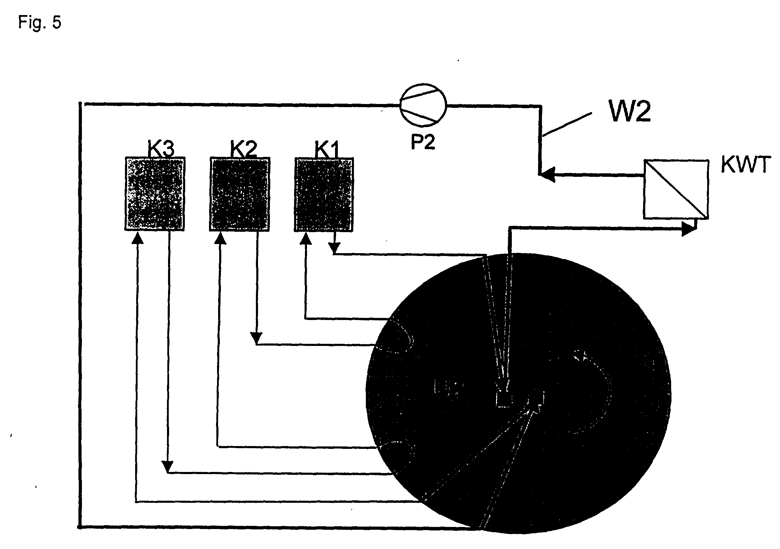

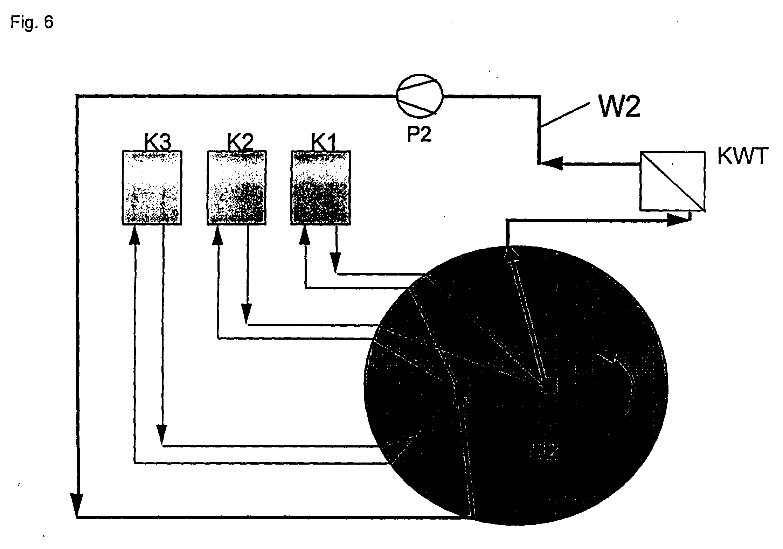

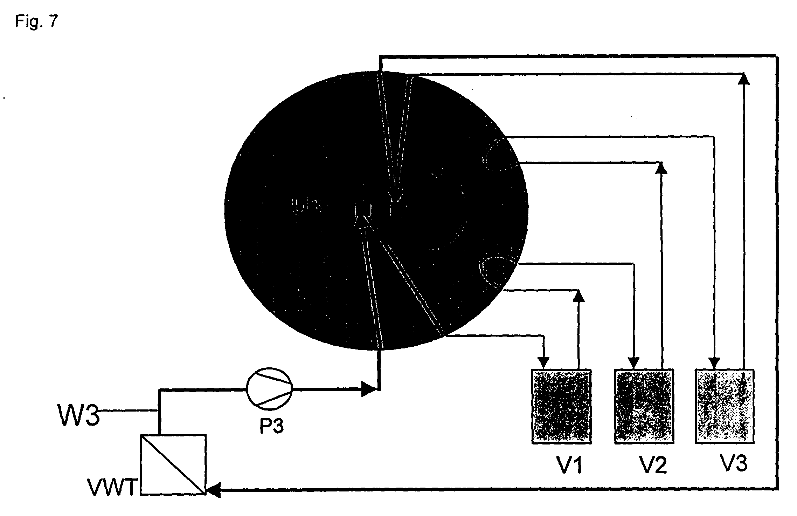

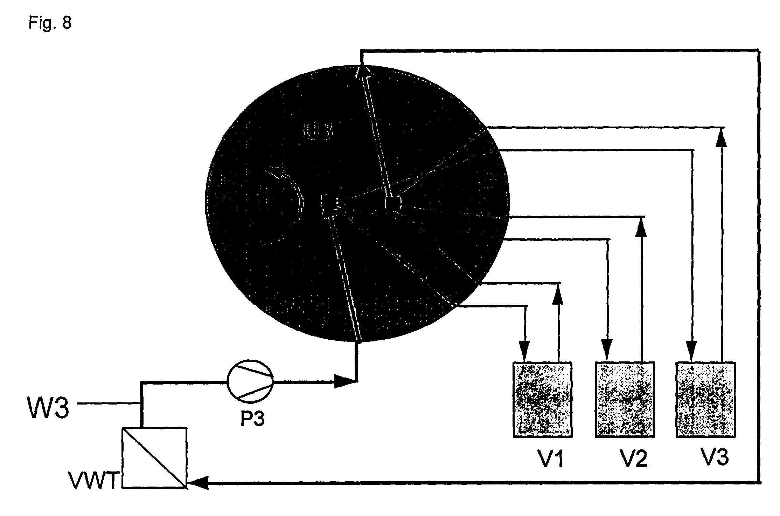

Wie aus den Fig. 5 bis 8 zu ersehen ist, kann die Umschalteinrichtung U2 auch nur für die Weiterschaltung der Kondensatoren K1, K2, K3 im Wärmeträgerkreislauf W2 vorgesehen sein. Dabei können die Kondensatoren, je nach der Ausbildung der Umschalteinrichtung U2 in Reihe oder parallel geschaltet sein.

Für die Weiterschaltung der Verdampfer V1, V2, V3 des Wärmeträgerkreislaufes W3 ist in diesem Fall eine weitere Umschalteinrichtung U3 vorgesehen, wobei die Verdampfer V1, V2, V3 über die Umschalteinrichtung U3 in Reihe oder parallel geschaltet sein können.

Mit diesen Umschalteinrichtungen U1 und U2, bzw. U1, U2 und U3 können die Module jeweils von der Hochdruckphase in die Niederdruckphase und umgekehrt geschaltet werden.

In den desorbierenden Modulen M1 bis M3 der Hochdruckphase wird in den Desorbern D1 bis D3 ein Adsorbat aus einem Adsorbens durch Erhitzen des Adsorbens verdampft und in den Kondensatoren K1 bis K3 kondensiert, wobei die Kondensationswärme im Kondensator-Wärmetauscher KWT an den Verbraucherkreis W4 abgegeben wird. Der Wärmeträger W1 wird beim Durchströmen der Desorber D1 bis D3 abgekühlt.

In den adsorbierenden Modulen M4 bis M6 der Niederdruckphase wird in den Verdampfern V1 bis V3 ein flüssiges Adsorbat verdampft und dadurch ein Wärmeträger des Wärmeträgerkreislaufes W3 abgekühlt, der im Verdampfer-Wärmetauscher VWT durch Aufnahme von Umgebungewärme aufgewärmt wurde. Das verdampfte Adsorbat wird dabei vom Adsorbens aufgenommen. Die dabei freiwerdende Adsorptionswärme wärmt den Wärmeträger W1 auf.

Mit den Umschalteinrichtungen U1 und U2 können die Position der Module M1 bis M6 in den Kreisläufen W1, W2, W3 der Reihe nach durch Weiterschaltung der Umschalteinrichtungen U1, U2 bzw. U1, U2, U3 gewechselt werden.

Dies bedeutet für den Kreislauf W1, daß jedes Modul seine Position im Uhrzeigersinn wechselt.

So kommt der Desorber D3 in die Position von D2, D2 in jene von D1 und der Desorber D1 wechselt auf den Adsorber A3, A3 auf A2 der Adsorber A2 auf die Position des A1 und der Adsorber A1 wechselt auf die Position des Desorbers D3.

Dadurch kommt von den Modulen M1 bis M3, deren Desorber D1 bis D3 vor dem Schaltvorgang in der Hochdruckphase und die Adsorber A1 bis A3 der Module M4 bis M6 in der Niederdruckphase arbeiten, nach dem Schaltvorgang der Adsorber A1 in die Hochdruckphase und der Desorber D1 in die Niederdruckphase. Dies bedeutet, daß der Desorber D1 von der Hochdruckphase in die Niederdruckphase gewechselt und damit der Desorber D1 des Moduls M1 zum Adsorber gewechselt wird.

Analog hierzu bedeutet dies für die Kreisläufe W2 und W3, daß der Kondensator K1 des Moduls M1 vor dem Schaltvorgang entsprechend zum Verdampfer nach dem Schaltvorgang wird. Der Verdampfer V1 des Moduls M4 vor dem Schaltvorgang wird entsprechend zum Kondensator nach dem Schaltvorgang. Für den Betrieb der Kondensatoren K und der Verdampfer V, die beim Schaltvorgang von der Hochdruck- in die Niederdruckphase oder umgekehrt wechselt, können folgende Betriebsweisen ausgeführt werden.
1. Der Wärmeträger durchströmt in den die Wärmeträgerkreisläufen W2 bzw. W3 die Module, die beim Schaltvorgang einen Betriebsphasenwechsel durchgemacht haben, nicht, so daß sich der Verdampfer, der vor dem Schaltvorgang noch als Kondensator gearbeitet hat, nur durch verdampfendes Adsorbat abgekühlt, nicht aber durch Wärmeabfuhr an die Umgebung über den Kreislauf W2 an den Verdampfer-Wärmetauscher VWT. Entsprechend heizt sich der Kondensator, der vor dem Schaltvorgang noch Verdampfer war, nur durch kondensierendes Adsorbat auf und nicht durch Wärmezufuhr aus dem Kreislauf W2 vom Kondensator-Wärmetauscher KWT.
2. Der Wärmeträger durchströmt in den die Wärmeträgerkreisläufen W2 bzw. W3 die Module, die beim Schaltvorgang einen Betriebsphasenwechsel durchgemacht haben, so daß sich der Verdampfer, der vor dem Schaltvorgang noch als Kondensator gearbeitet hat, sowohl durch verdampfendes Adsorbat als auch durch Wärmeabfuhr an die Umgebung über den Kreislauf W2 an den Verdampfer-Wärmetauscher VWT abkühlt. Entsprechend heizt sich der Kondensator, der vor dem Schaltvorgang noch als Verdampfer gearbeitet hat, sowohl durch kondensierendes Adsorbat als auch durch Wärmezufuhr aus dem Kreislauf W2 vom Kondensator-Wärmetauscher KWT auf.

Die bei unterschiedlichen Lastzuständen, wie Vollast und Teillast der Wärmepumpe erforderlichen unterschiedlichen Heizleistungen können mit entsprechenden Veränderungen der Volumenströme Vp1, Vp2 und Vp3 in den Wärmeträgerkreisläufen W1, W2, W3 nach einem vorgegebenen Algorithmus gesteuert werden. Dabei wird der Volumenstrom vermindert je geringer die im Verbraucher-Kreislauf W4 bereitzustellende Heizleistung ist.

Weiters können die unterschiedlichen Heizleistungen mittels entsprechenden Veränderungen der Zyklusdauer tZyk der Sorptionszyklen nach einem vorgegebenen Algorithmus erreicht werden. Dabei wird die Zykluszeit umso mehr erhöht, je geringer die im Verbraucher-Kreislauf W4 bereitzustellende Heizleistung ist.

Unterschiedliche Heizleistungen im Verbraucher-Kreislauf W4 können auch durch einen nach einem vorgegebenen Algorithmus stufig oder stetig modulierend betriebenen Brenner B erreicht werden, der den Wärmeträger im Wärmeträgerkreislauf W1 erhitzt.

## Patentansprüche

1. Verfahren zur Steuerung einer Adsorptionswärmepumpe mit mehreren Modulen, wobei außer einem einen Verbraucher (V), eine Pumpe (P4), sowie zwei Wärmetauscher (KWT, NWT) aufweisenden Verbraucherkreislauf (W4), insgesamt mindestens drei ebenfalls je eine Pumpe (P1, P2, P3) aufweisende Wärmeträgerkreisläufe (W1, W2, W3) zusammengeschaltet sind, von denen einer (W1) alle Adsorber (A) und Desorber (D) aller Module (M1, M2, M3, M4, M5, M6) seriell mit einem von einem Brenner (B) beaufschlagbaren Hochtemperatur-Wärmetauscher (HWT) mit einem Niedertemperatur-Wärmetauscher (NWT) sowie einer Pumpe (P1) verbindet, wobei in einem weiteren Wärmeträgerkreislauf (W2) die Kondensatoren (K1, K2, K3) der Module (M1, M2, M3) mit einem Kondensator-Wärmetauscher (KWT) und der Pumpe (P2) seriell zusammengeschaltet sind und im dritten Wärmeträgerkreislauf (W3) die Verdampfer (V1, V2, V3) aller Module (M4, M5, M6) seriell mit einem Verdampfer-Wärmetauscher (VWT) und einer Pumpe (P3) zusammengeschaltet sind, **dadurch gekennzeichnet**, daß die bei unterschiedlichen Lastzuständen der Wärmepumpe erforderlichen Heizleistungen mittels einer Veränderung der Volumenströme (Vp1, Vp2, Vp3) der Wärmeträgerkreisläufe (W1, W2, W3) nach einem vorgegebenen Algorithmus bereitgestellt werden, wobei die im Verbraucherkreislauf (W4) bereitgestellte Heizleistung umso geringer ist desto geringer der jeweilige Volumenstrom ist.

2. Verfahren zur Steuerung einer Adsorptionswärmepumpe mit mehreren Modulen, wobei außer einem einen Verbraucher (V), eine Pumpe (P4), sowie zwei Wärmetauscher (KWT, NWT) aufweisenden Verbraucherkreislauf (W4), insgesamt mindestens drei ebenfalls je eine Pumpe (P1, P2, P3) aufweisende Wärmeträgerkreisläufe (W1, W2, W3) zusammengeschaltet sind, von denen einer (W1) alle Adsorber (A) und Desorber (D) aller Module (M1, M2, M3, M4, M5, M6) seriell mit einem von einem Brenner (B) beaufschlagbaren Hochtemperatur-Wärmetauscher (HWT) mit einem Niedertemperatur-Wärmetauscher (NWT) sowie einer Pumpe (P1) verbindet, wobei in einem weiteren Wärmeträgerkreislauf (W2) die Kondensatoren (K1, K2, K3) der Module (M1, M2, M3) mit einem Kondensator-Wärmetauscher (KWT) und der Pumpe (P2) seriell zusammengeschaltet sind und im dritten Wärmeträgerkreislauf (W3) die Verdampfer (V1, V2, V3) aller Module (M4, M5, M6) seriell mit einem Verdampfer-Wärmetauscher (VWT) und einer Pumpe (P3) zusammengeschaltet sind, **dadurch gekennzeichnet**, daß die bei unterschiedlichen Lastzuständen der Wärmepumpe erforderlichen Heizleistungen mittels einer Veränderung der Zyklusdauer (tZyk) der Sorptionszyklen nach einem vorgegebenen Algorithmus bereitgestellt werden, wobei für einen engen Bereich der Zyklusdauer gilt, daß je länger die Zyklusdauer ist, desto geringer ist die im Verbraucherkreislauf (W4) bereitgestellte Heizleistung.

3. Verfahren zur Steuerung einer Adsorptionswärmepumpe mit mehreren Modulen, wobei außer einem einen Verbraucher (V), eine Pumpe (P4), sowie zwei Wärmetauscher (KWT, NWT) aufweisenden Verbraucherkreislauf (W4), insgesamt mindestens drei ebenfalls je eine Pumpe (P1, P2, P3) aufweisende Wärmeträgerkreisläufe (W1, W2, W3) zusammengeschaltet sind, von denen einer (W1) alle Adsorber (A) und Desorber (D) aller Module (M1, M2, M3, M4, M5, M6) seriell mit einem von einem Brenner (B) beaufschlagbaren Hochtemperatur-Wärmetauscher (HWT) mit einem Niedertemperatur-Wärmetauscher (NWT) sowie einer Pumpe (P1) verbindet, wobei in einem weiteren Wärmeträgerkreislauf (W2) die Kondensatoren (K1, K2, K3) der Module (M1, M2, M3) mit einem Kondensator-Wärmetauscher (KWT) und der Pumpe (P2) seriell zusammengeschaltet sind und im dritten Wärmeträgerkreislauf (W3) die Verdampfer (V1, V2, V3) aller Module (M4, M5, M6) seriell mit einem Verdampfer-Wärmetauscher (VWT) und einer Pumpe (P3) zusammengeschaltet sind, **dadurch gekennzeichnet**, daß die bei unterschiedlichen Lastzuständen der Wärmepumpe erforderlichen Heizleistungen mittels eines nach einem vorgegebenen Algorithmus stufig oder stetig modulierenden Brenners (B) in dem Wärmeträgerkreislauf (W1) bereitgestellt wird.
